# EUROPÄISCHE PATENTSCHRIFT

(11) **EP 0 367 174 B1**
(45) Veröffentlichungstag und Bekanntmachung des Hinweises auf die Patenterteilung: **03.03.1993**
(21) Anmeldenummer: 89120094.1
(22) Anmeldetag: 30.10.1989
(51) Int. Cl.: B64F 1/22

(54) **Schleppfahrzeug zum Rangieren von Flugzeugen am Boden**
Aircraft ground-handling vehicle
Véhicule tracteur pour manoeuvrer les avions au sol

(30) Priorität: 02.11.1988 DE 3837151
(43) Veröffentlichungstag der Anmeldung: 09.05.1990
(73) Patentinhaber: KAMAG TRANSPORTTECHNIK GMBH & CO., D-89079 Ulm (DE)
(72) Erfinder: Volker, Schardt, D-5910 Kreuztal 7 (DE)
(74) Vertreter: Kohlmann, Karl Friedrich, Dipl.-Ing.

(56) Entgegenhaltungen:
- EP-A- 0 126 386
- DE-A- 3 521 429
- DE-A- 3 801 855
- FR-A- 2 454 409

## Beschreibung

Die Erfindung bezieht sich auf ein Schleppfahrzeug zum Rangieren von Flugzeugen am Boden, mit einer U-förmigen Aussparung im hinteren Teil des Schleppfahrzeuges zum Aufnehmen des um eine im wesentlichen vertikale Achse schwenkbaren Bugfahrwerkes, einer Halte- und Hubvorrichtung zu beiden Seiten der U-förmigen Aussparung des Schleppfahrzeuges, welche zum Erfassen des Bugfahrwerkes im Bereich des Umfanges des oder der Bugräder Greifarme aufweist, wobei die hinteren Greifarme in einer vertikalen, senkrecht zur Schleppfahrzeuglängsachse verlaufenden Ebene paarweise ein- und ausschwenkbar sind, einer Verstelleinrichtung zum Anpassen der Greifarme an den jeweiligen Bugraddurchmesser, wobei die Schwenkachse des Bugfahrwerkes senkrecht durch die Achse der Hinterräder des Schleppfahrzeuges verläuft.

Bisher wurden für fünf in Gewicht und Größe unterschiedliche Flugzeugtypen fünf verschiedene Schleppstangen benötigt. Man hat daraufhin Schlepper entwickelt, die das Flugzeug ohne Schleppstange bugsieren. Ein solcher Schlepper ist beispielsweise in der DE-OS 36 16 807 beschrieben, bei dem das Bugfahrwerk des Flugzeugs auf eine Hubschaufel gezogen bzw. geschoben wird. Dabei bewegt sich das Flugzeug, dessen Bremsen gelüftet sein müssen, während der Schlepper in gebremstem Zustand gehalten wird.

Dasselbe Problem tritt bei einem Schleppfahrzeug nach der DE-OS 38 01 855 auf. Bei dieser bekannten Konstruktion wird eine in der hinteren U-förmigen Aussparung des Schleppfahrzeugs angeordnete Hubschaufel zu Boden gelassen, auf deren Unterstützungsfläche dann das Bugfahrwerk mit Hilfe einer Greif- und Einzugsvorrichtung hinaufgezogen wird. Auch hier muß das Flugzeug während des Ankoppelns an das Schleppfahrzeug bewegt werden, und zwar unter Umständen in eine Richtung, bei der unerwünschte Kräfte auf das Bugfahrwerk einwirken können.

Bei einer Ausführungsform des Schleppfahrzeuges nach der DE-OS 38 01 855 ist die Hubschaufel nicht nur absenk- und abhebbar, sondern zusätzlich noch um einen Pendelpunkt verschwenk- und kippbar. Zur Halterung der Hubschaufel dienen dabei Längs-, Quer-, und Parallelogrammlenker sowie Kolben-Zylinder-Einheiten, die eine Vielzahl von Bewegungen der Hubschaufel um die verschiedensten Achsen in Fahrzeugquer- und Fahrzeuglängsrichtung ermöglichen.

So ist bei bestimmten Flugzeugtypen die Achse des Bugfahrwerkes gegenüber der Vertikalen nach vorne geneigt, so daß es bei Kurvenfahrt zu einer Neigung der Radachse gegenüber der Horizontalen kommt. In solchen Fällen kann die Hubschaufel um den Pendelpunkt geschwenkt werden, so daß ein schonender Schleppvorgang erreicht wird. Aufgrund der vielen Freiheitsgrade und Möglichkeiten ist die bekannte Konstruktion nach der DE-OS 31 01 855 im Aufbau und der Steuerung jedoch relativ kompliziert, da alle Bewegungen der Hubschaufel aktiv gesteuert bzw. mitgeführt werden müssen, wodurch nicht in allen Einsatzfällen ein spannungsfreies Abschleppen gewährleistet ist.

Aus der US-PS 43 75 244 ist ein gattungsgemäßes Schleppfahrzeug bekannt, bei dem das Bugfahrwerk bei Stillstand sowohl des Schleppfahrzeuges als auch des Flugzeuges aufgenommen werden kann, und deshalb die eingangs beschriebenen negativen Krafteinwirkungen nicht auftreten. Allerdings besteht auch bei dieser bekannten Konstruktion das Problem, daß es bei Winkeländerungen zwischen der Radachse des Bugfahrwerkes und der Hinterradachse des Schleppfahrzeuges, wie sie beispielsweise beim Befahren von Bodenunebenheiten auftreten, zu unerwünschten Krafteinwirkungen auf das Bugfahrwerk kommt.

Aufgabe der vorliegenden Erfindung ist es, ein Schleppfahrzeug der in der US-PS 43 75 244 beschriebenen Gattung derart weiterzubilden, daß ein verspannungsfreies, schonendes und sicheres Abschleppen einer Vielzahl verschiedener Flugzeugtypen gewährleistet ist.

Diese Aufgabe wird erfindungsgemäß dadurch gelöst, daß die Halte- und Hubvorrichtung zum Umklammern jedes Bugrades vier Greifarme aufweist, die jeweils an Schiebern befestigt sind, welche zur horizontalen Anpassung an den jeweiligen Bugraddurchmesser auf sich im wesentlichen horizontal erstreckenden oberen und unteren Gleitführungen verschiebbar angeordnet sind, wobei die Gleitführungen zur vertikalen Anpassung an den jeweiligen Bugraddurchmesser in vertikaler Richtung gegeneinander verfahrbar sind, und daß der gesamte bewegliche Teil der Halte- und Hubvorrichtung in einem Drehkranz um eine zur Längsachse des Schleppfahrzeuges parallele Achse begrenzt schwenkbar gelagert ist, wobei die Anstellbewegungen für die Greifarme entsprechend dem Bugraddurchmesser des jeweiligen Flugzeugtyps derart einstellbar sind, daß bei senkrecht durch die Achse der nicht lenkbaren Hinterräder des Schleppfahrzeuges verlaufender Schwenkachse des Bugfahrwerkes die Achse des Drehkranzes stets durch die Achse des oder der Bugräder verläuft.

Gemäß einer vorteilhaften Weiterbildung ist der Drehkranz zusammen mit dem gesamten beweglichen Teil der Halte- und Hubvorrichtung in einer am Schleppfahrzeug angeordneten, vertikalen Führung auf- und abbewegbar. Auf diese Weise Wird ein besonders einfacher und störunanfälliger technischer Aufbau erzielt.

Um Schäden am Bugfahrwerk des Flugzeuges auf einfache Weise zu vermeiden, ist es zweckmäßig, daß der Einschlagwinkel der lenkbaren Vorderräder des Schleppfahrzeuges über Potentiometer in Abhängigkeit des für den jeweiligen Flugzeugtyp maximal zulässigen Schwenkwinkels der Schwenkachse des Bugfahrwerkes begrenzbar ist.

Bei dem erfindungsgemäßen Schleppfahrzeug stellt sich die Halte- und Hubvorrichtung vorzugsweise computergesteuert automatisch auf unterschiedliche Raddurchmesser der Bugräder von fünf unterschiedlichen Flugzeugtypen ein, und zwar so, daß beim Umklammern und Anheben der Bugräder weder das Schleppfahrzeug noch das Flugzeug eine Fahrbewegung ausführt, so daß keine unerwünschten Kräfte auf das Bugfahrwerk ausgeübt werden, das je nach Flugzeugtyp ein Gewicht zwischen 6 und 25 Tonnen auf das Schleppfahrzeug bringt. Das Umklammern der Bugräder und Anheben erfolgt also im Gegensatz zu den bisher bekannten Schleppeinrichtungen bei völligem Stillstand von Schleppfahrzeug und Flugzeug. Die Steuerung kann nach Computerprogramm erfolgen, das beispielsweise durch Einstecken einer für den jeweiligen Flugzeugtyp charakteristischen Codekarte im Schleppfahrzeug eingeleitet wird.

Dadurch, daß die Bugfahrwerkachse in Schleppstellung senkrecht über der nicht gelenkten hinteren Antriebsachse des Schleppfahrzeuges steht, wobei die Schwenkachse des Bugfahrwerks diese Antriebsachse in lotrechter Richtung schneidet, und dadurch, daß die Achse des Drehkranzes in gedachter Verlängerung die Achse der Räder des Bugfahrwerkes schneidet, werden keine Spannkräfte auf das Bugfahrwerk, d.h. weder auf die Bugradachse noch auf das Federbein, ausgeübt, wenn beim Schleppvorgang das Schleppfahrzeug bei unebenem Boden um seine Längsachse eine Rollbewegung ausführen sollte.

Das erfindungsgemäße Schleppfahrzeug ist aufgrund seines Konstruktionsprinzips relativ einfach aufgebaut und nicht teuer in der Anschaffung, was noch dadurch unterstrichen wird, daß mindestens fünf verschiedene Großraumflugzeugtypen ohne irgendeine Veränderung am Schleppfahrzeug bedient werden können. Das Schleppfahrzeug braucht nur noch mit den inneren vorderen Greifarmen bei eingeklappten äußeren (hinteren) Greifarmen an die Bugräder herangefahren zu werden, so daß auch eine sehr schnelle Abfertigung erreicht wird. Die automatische Begrenzung des Schwenkwinkels auf etwa 70 - 80° kann über Potentiometer an den gelenkten vorderen Antriebsrädern des Schleppfahrzeugs bewirkt werden.

In den Zeichnungen ist ein Ausführungsbeispiel des erfindungsgemäßen Schleppfahrzeuges schematisch vereinfacht dargestellt. Dabei zeigt
Fig. 1 eine Seitenansicht des Schleppfahrzeugs,
Fig. 2 eine Ansicht in Richtung des Pfeiles II in Fig. 1,
Fig. 3 die Draufsicht auf das Schleppfahrzeug,
Fig. 4 in etwas vergrößerter Darstellung eine Seitenansicht des hinteren Teils des Schleppfahrzeugs, und
Fig. 5 in etwas vergrößerter Darstellung die hinteren linken Greifarme.

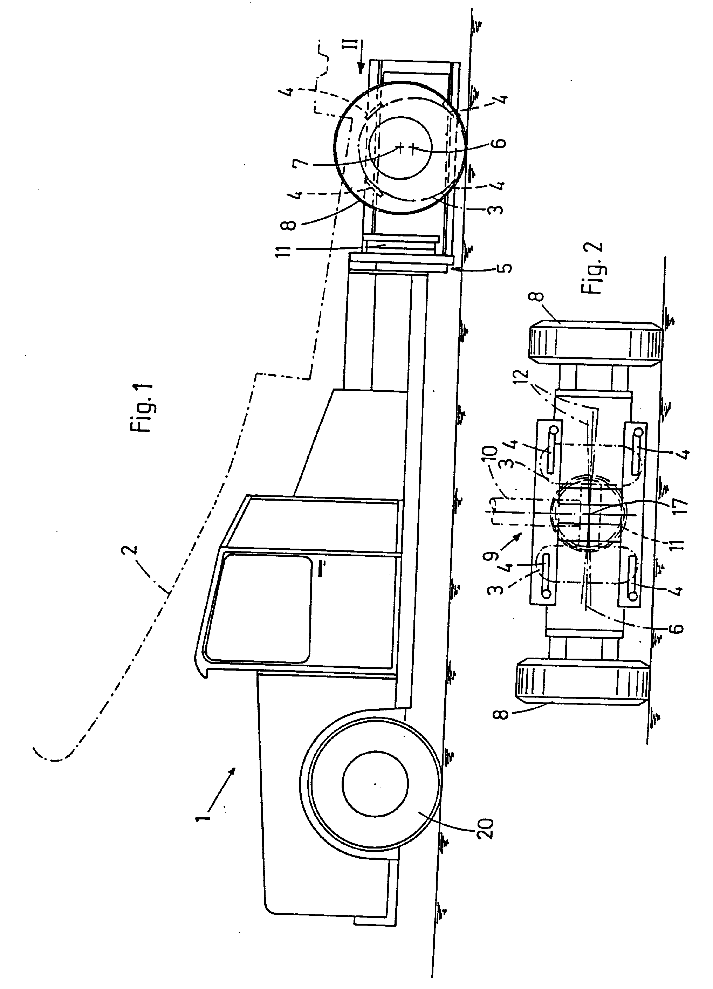

In Fig. 1 ist in Seitenansicht das Schleppfahrzeug 1 in einer Stellung gezeigt, in der es sich unter dem strichpunktiert angedeuteten Bug 2 eines Flugzeugs befindet und in der die Bugräder 3 des Bugfahrwerkes 9 des Flugzeugs bereits durch je vier Greifarme 4 einer Halte- und Hubvorrichtung 5 umklammert, aber noch nicht angehoben sind. Aus Fig. 1 ist erkennbar, daß die Achse 6 der Bugräder 3 in einer lotrechten Ebene liegt, in der auch die Achse 7 von hinteren Antriebsrädern 8 des Schleppfahrzeuges 1 liegt.

In der Darstellung nach Fig. 1 ist das Bugfahrwerk 9 mit den Bugrädern 3 und dem Federbein 10 bereits für den Schleppvorgang angehoben. Fig. 1 läßt auch einen Drehkranz 11 erkennen, der im heb- und senkbaren Teil der Halte- und Hubvorrichtung 5 vorgesehen ist und seitliche Rollbewegungen des Schleppfahrzeuges 1 auf unebenem Boden ausgleicht, wie durch die strichpunktierten Linien 12 angedeutet ist.

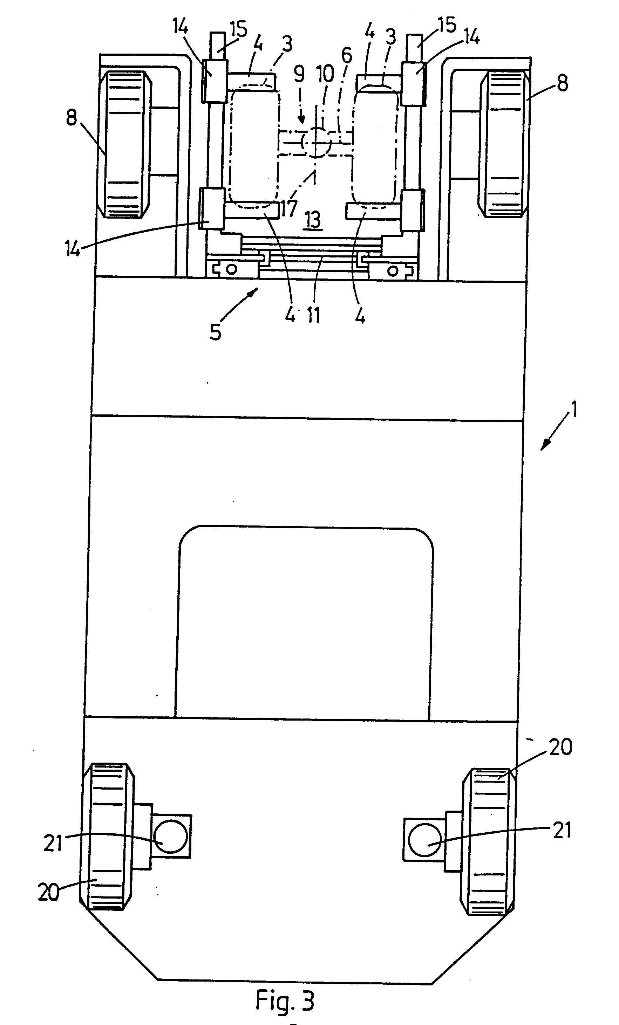

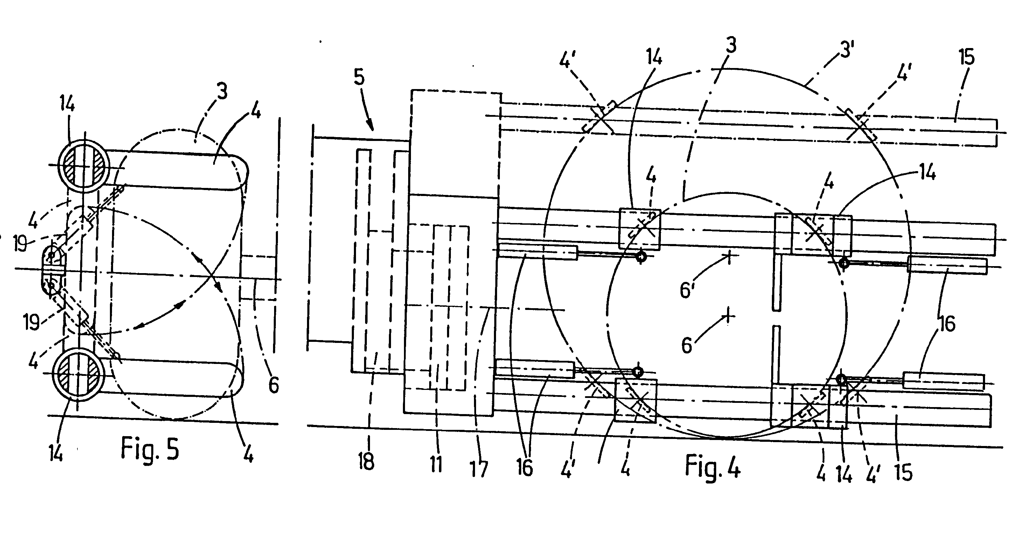

Wie Fig. 3 erkennen läßt, sitzt die Halte- und Hubvorrichtung 5 in einer U-förmigen Aussparung 13, die durch das gegabelte Hinterteil des Schleppfahrzeugs 1 gebildet wird. Die Greifarme 4 sind an Schiebern 14 befestigt, die auf oberen und unteren Gleitführungen 15 verschiebbar sind. Die Gleitführungen 15 sind zueinander höhenverstellbar. Die Einstellung der Schieber 14 kann durch das bereits eingangs erwähnte Computerprogramm entsprechend dem jeweiligen Flugzeugtyp bzw. Bugraddurchmesser erfolgen. An den Gleitführungen 15 und Schiebern 14 greifen Hydraulikzylinder 16 an, um die Schieber 14 ebenfalls programmgemäß zu verschieben (siehe Fig. 4).

Fig. 4 zeigt schematisch, wie unterschiedliche Bugraddurchmesser, die je nach Flugzeugtyp 600 bis 1000 mm betragen können, erfaßt werden. Fig. 4 läßt außerdem erkennen, daß die Achse 17 des Drehkranzes 11 durch die Achse 6 der Bugräder 3, und zwar in der Mitte zwischen den Bugrädern (vgl. hierzu Fig. 2), hindurch verläuft, wie in Fig. 4 in bezug auf das kleinere Bugrad 3 dargestellt. Für ein größeres Bugrad 3′ muß man sich den Drehkranz 11 entsprechend nach oben versetzt vorstellen, so daß seine Achse 17 durch die Achse 6′ des größeren Bugrades 3′ verläuft. Der gesamte bewegliche Teil der Halte- und Hubvorrichtung 5 ist komplett mit dem Drehkranz 11 in einer senkrechten Führung 18 auf- und abbewegbar.

Wie in Fig. 5 dargestellt, sind die hinteren Greifarme 4 an den Schiebern 14 in einer parallel zu der Achse der Hinterräder 8 des Schleppfahrzeugs 1 verlaufenden lotrechten Ebene ein- und ausschwenkbar, wofür Hydraulikzylinder 19 vorgesehen sind.

Das Ankuppeln und Abschleppen eines Flugzeugs mit Hilfe des beschriebenen Schleppfahrzeuges geschieht wie folgt:
Zunächst wird am Bugfahrwerk 9 des Flugzeugs ein passender Stift eingeführt, um die Lenkung vom Cockpit her auszuschalten. Im Schleppfahrzeug wird eine Codekarte in einen Computer gegeben. Diese Codekarte ist auf den betreffenden Typ des abzuschleppenden Flugzeugs programmiert. Die Gleitführungen 15 stellen sich bereits jetzt nach Höhe und gegenseitigem Abstand auf den jeweiligen Bugraddurchmesser ein, wobei auch die inneren Schieber 14 in eine Stellung fahren, in der die nachher erfaßten Bugräder 3 bzw. 3′ mit ihrer Achse 6 bzw. 6′ in einer die Achse 7 der hinteren Antriebsräder 8 des Schleppfahrzeugs 1 enthaltenden lotrechten Ebene stehen. Die hinteren Greifarme 4 sind, wie in Fig. 5 strichpunktiert angedeutet, eingeklappt, so daß die U-förmige Aussparung 13 nach hinten völlig offen ist. Nun wird das Schleppfahrzeug 1 an das Bugfahrwerk 9 herangefahren, bis die vorderen, nicht einschwenkbaren Greifarme die Bugräder 3 bzw. 3′ berühren. Die hinteren Schieber 14 stehen dabei so, daß die hinteren Greifarme 4 nunmehr hinter den Bugrädern 3 bzw. 3′ in die U-förmige Aussparung 13 eingeschwenkt werden können, was auch dann automatisch geschieht. Die geschilderte Schwenkanordnung der hinteren Greifarme 4 ist deshalb wichtig, weil manche Flugzeuge hinter den Bugrädern 3, 3′ Steinschlag-Abfangbleche besitzen. Die hinteren Greifarme 4 können bei der beschriebenen Anordnung zwischen Bugrad 3, 3′ und Abfangblech eingeschwenkt werden. Nach dem Einschwenken der hinteren Greifarme 4 werden diese über deren Schieber 14 durch die zugehörigen Zylinder 16 an die Bugräder 3, 3′ herangefahren, so daß nunmehr das Bugfahrwerk 9 umklammert ist. Nun wird die Halte- und Hubvorrichtung 5 bis zu einer Bodenfreiheit der Bugräder von etwa 200 mm durch Zylinder (nicht dargestellt) angehoben. Das Abschleppen und Rangieren des Flugzeugs kann beginnen. Dies alles sind automatisch gesteuerte Vorgänge, die in wenigen Sekunden ablaufen, bis das Abschleppen beginnt. Entsprechende Potentiometer 21 (vgl. Fig. 3) an den lenkbaren Vorderrädern 20 des Schleppfahrzeuges 1 sorgen dafür, daß der für den jeweiligen Flugzeugtyp maßgebende maximale Schwenkwinkel des Bugfahrwerks nicht überschritten wird.

## Patentansprüche

1. Schleppfahrzeug zum Rangieren von Flugzeugen am Boden, mit einer U-förmigen Ausparung im hinteren Teil des Schleppfahrzeuges zum Aufnehmen des um eine im wesentlichen vertikale Achse schwenkbaren Bugfahrwerkes, einer Halte- und Hubvorrichtung zu beiden Seiten der U-förmigen Aussparung des Schleppfahrzeuges, welche zum Erfassen des Bugfahrwerkes im Bereich des Umfanges des oder der Bugräder Greifarme aufweist, wobei die hinteren Greifarme in einer vertikalen, senkrecht zur Schleppfahrzeuglängsachse verlaufenden Ebene paarweise ein- und ausschwenkbar sind, einer Verstelleinrichtung zum Anpassen der Greifarme an den jeweiligen Bugraddurchmesser, wobei die Schwenkachse des Bugfahrwerkes senkrecht durch die Achse der Hinterräder des Schleppfahrzeuges verläuft,
dadurch **gekennzeichnet,** daß
die Halte- und Hubvorrichtung (5) zum Umklammern jedes Bugrades (3, 3′) vier Greifarme (4) aufweist, die jeweils an Schiebern (14) befestigt sind, welche zur horizontalen Anpassung an den jeweiligen Bugraddurchmesser auf sich im wesentlichen horizontal erstreckenden oberen und unteren Gleitführungen (15) verschiebbar angeordnet sind, wobei die Gleitführungen (15) zur vertikalen Anpassung an den jeweiligen Bugraddurchmesser in vertikaler Richtung gegeneinander verfahrbar sind, und daß der gesamte bewegliche Teil der Halte- und Hubvorrichtung (5) in einem Drehkranz (11) um eine zur Längsachse des Schleppfahrzeuges (1) parallele Achse (17) begrenzt schwenkbar gelagert ist, wobei die Anstellbewegungen für die Greifarme (4) entsprechend dem Bugraddurchmesser des jeweiligen Flugzeugtyps derart einstellbar sind, daß bei senkrecht durch die Achse (7) der nicht-lenkbaren Hinterräder (8) des Schleppfahrzeuges verlaufender Schwenkachse des Bugfahrwerkes die Achse (17) des Drehkranzes (11) stets durch die Achse (6, 6′) des oder der Bugräder (3, 3′) verläuft.

2. Schleppfahrzeug nach Anspruch 1,
dadurch **gekennzeichnet,** daß der Drehkranz (11) zusammen mit dem gesamten beweglichen Teil der Halte- und Hubvorrichtung (5) in einer am Schleppfahrzeug angeordneten vertikalen Führung (18) auf- und abbewegbar ist.

3. Schleppfahrzeug nach Anspruch 1,
dadurch **gekennzeichnet,** daß der Einschlagwinkel der lenkbaren Vorderräder (20) über Potentiometer (21) in Abhängigkeit des für den jeweiligen Flugzeugtyp maximal zulässigen Schwenkwinkels der Schwenkachse des Bugfahrwerkes (10) begrenzbar ist.

## Claims

1. A towing vehicle for shunting aircraft on the ground, with a U-shaped recess in the rear part of the towing vehicle for the accommodation of the nose wheel landing gear, which is pivotable about a substantially vertical axis, with a holding and lifting device on both sides of the U-shaped recess of the towing vehicle comprising gripper arms for the engagement of the nose wheel landing gear in the region of the periphery of the nose wheel or wheels, where the rear gripper arms are pivotable in pairs imwardly and outwardly in a vertical plane extending at right angles to the longitudinal axis of the towing vehicle, and with an adjusting device which serves to adapt the gripper arms to the respective nose wheel diameter, where the turning axis of the nose wheel landing gear crosses the axis of the rear wheels of the towing vehicle at right angles, characterised in that the holding and lifting device (5) comprises four gripper arms (4) which serve to embrace each nose wheel (3, 3′) and which are each attached to pushers (14) which are displaceably arranged on substantially horizontally extending, upper and lower slideways (15) for horizontal adaptation to the respective nose wheel diameter, where the slideways (15) are movable in the vertical direction in relation to one another for vertical adaptation to the respective nose wheel diameter, and that the entire movable part of the holding and lifting device (5) is mounted in a live ring (11) so as to be pivotable to a limited extent about an axis (17) parallel to the longitudinal axis of the towing vehicle (1), where the setting movements for the gripper arms (4) are adjustable in accordance with the nose wheel diameter of the respective type of aircraft in such manner that when the turning axis of the nose wheel landing gear crosses the axis (7) of the non-steerable rear wheels (8) of the towing vehicle at right angles, the axis (17) of the live ring (11) always extends through the axis (6, 6′) of the nose wheel or wheels (3, 3′).

2. A towing vehicle as claimed in Claim 1, characterised in that the live ring (11), together with the entire movable part of the holding and lifting device (5), can be moved upwards and downwards in a vertical guide (18) provided on the towing vehicle.

3. A towing vehicle as claimed in Claim 1, characterised in that the steering angle of the steerable front wheels (20) can be limited via potentiometers (21) in dependence upon the maximum permissible turning angle of the turning axis of the nose wheel landing gear (10) for the respective type of aircraft.

## Revendications

1. Véhicule tracteur, pour manoeuvrer les avions au sol, avec un évidement en forme de U dans la partie arrière du véhicule tracteur, pour loger le train d'atterrisage avant, pivotant autour d'un axe sensiblement vertical, un dispositif de maintien et de levage agissant des deux côtés de l'évidement en forme de U du véhicule tracteur, présentant, pour opérer la saisie du train d'atterrissage avant, des bras préhenseurs disposés dans la zone de la périphérie du ou des roues avant, les bras préhenseurs arrière étant escamotables ou déployables, par pivotement, par couples, dans un plan vertical, s'étendant perpendiculairement à l'axe longitudinal du véhicule tracteur, un dispositif d'ajustage pour adapter les bras préhenseurs au diamètre de la roue du train d'atterrissage avant, l'axe de pivotement du train d'atterrissage avant croise de façon perpendiculaire l'axe des roues arrières du véhicule tracteur, caractérisé en ce que le dispositif de maintien et de levage (5) présente, en vue d'enserrer chaque roue avant (3,3′), quatre bras préhenseurs (4), fixés chacun sur des curseurs (14) disposés, pour assurer une adaptation horizontale au diamètre spécifique de la roue avant, déplaçables sur des guidages coulissant supérieurs et inférieurs (15) s'étendant horizontalement, les guidages coulissant (15) étant déplaçables les uns par rapport aux autres en direction verticale, pour assurer une adaptation verticale au diamètre spécifique de la roue avant, et en ce que l'ensemble de la partie mobile du dispositif de maintien et de levage (5) est monté, dans une couronne rotative (11), de façon à pouvoir pivoter, de façon limitée, autour d'un axe (17) parallèle à l'axe longitudinal du véhicule tracteur (1), les mouvements d'orientation de réglage des bras préhenseurs (4) étant susceptibles d'être réglés, de manière correspondant au diamètre des roues avant du type respectif d'avion, de telle façon que, dans le cas où l'axe de pivotement du train d'atterrissage avant s'étend perpendiculairement en passant par l'axe (7) des roues arrière (8) non directrices du véhicule tracteur, l'axe (17) de la couronne rotative (11) passe toujours par l'axe (6,6′) de la ou des roues avant (3,3′).

2. Véhicule tracteur selon la revendication 1, caractérisé en ce que la couronne rotative (11) est levable et abaissable dans un guidage vertical (18), disposé sur le véhicule tracteur, conjointement avec l'ensemble de la partie mobile du dispositif de maintien et de levage (5).

3. Véhicule tracteur selon la revendication 1, caractérisé en ce que l'angle de braquage des roues avant directrices (20) est susceptible d'âtre limité, par l'intermédiaire d'un potentiomètre (21), en fonction de l'angle de pivotement maximal admissible, pour l'avion spécifique, de l'axe de pivotement du train d'atterrissage avant (10).
